## Europäisches Patentamt

## European Patent Office

## Office européen des brevets

(19)

(11) Numéro de publication: **0 045 679**
**B1**

(12) # FASCICULE DE BREVET EUROPEEN

(45) Date de publication du fascicule du brevet: **20.06.84**

(51) Int. Cl.³: **A 47 C 17/16, B 60 N 1/10**

(21) Numéro de dépôt: **81401181.3**

(22) Date de dépôt: **24.07.81**

---

(54) Siège transformable.

---

(30) Priorité: **31.07.80 FR 8016949**

(43) Date de publication de la demande:
**10.02.82 Bulletin 82/6**

(45) Mention de la délivrance du brevet:
**20.06.84 Bulletin 84/25**

(84) Etats contractants désignés:
**AT BE DE GB IT**

(56) Documents cités:
**CH - A - 178 176**
**FR - A - 710 150**

(73) Titulaire: **SOCIETE ANONYME DES USINES CHAUSSON**
**35, rue Malakoff**
**F-92601 Asnieres Cedex Hauts-de-Seine (FR)**

(72) Inventeur: **Quercy, Alexandre Paul Louis**
**66, rue Denfert Rochereau**
**F-92100 Boulogne Hauts-de-Seine (FR)**

(74) Mandataire: **Madeuf, Claude Alexandre Jean et al,**
**CABINET MADEUF 3, avenue Bugeaud**
**F-75116 Paris (FR)**

---

Courier Press, Leamington Spa, England.

## Description

La présente invention concerne un nouveau siège transformable utilisable dans de nombreux domaines mais que présente des avantages tout particuliers lorsqu'il est mis en oeuvre dans des véhicules dans lesquels de liège doit pouvoir former une couchette confortable.

Jusqu'à maintenant de nombreux véhicules, notamment des véhicules terrestres, sont munis de sièges couchettes mais ceux-ci présentent plusieurs inconvénients; tout d'abord dans la presque totalité des cas il existe un intervalle entre le dossier et l'assise lorsque le siège est en position couchette.

Tant l'assise que le dossier présentent, le plus sorvent, un galbe transversal permettant un maintien latéral de l'usager pendant le déplacement du véhicule mais ce galbe rend le siège tout à fait inconfortable lorsqu'il est utilisé en tant que couchette.

Cet inconvénient est encore augmenté lorsque le siège, en position couchette, est utilisé dans son sens transversal comme cela se produit dans certains véhicules de loisir, notamment de camping, qui prévoient d'utiliser les sièges avant en combinaison avec des coussins intermédiaires pour former une couchette dont la direction longitudinale est perpendiculaire à l'axe longitudinal du véhicule.

Parmi les documents de la technique antérieure, le brevet CH—A—178 176 a décrit un lit pliant dont deux parties sont reliées entre elles par des charnières et un bras pivotant dont une extrémité est articulée à l'une des parties tandis que l'autre peut coulisser dans une lumière de la seconde partie. Lorsque les deux parties du lit sont à angle droit, celle qui s'étend verticalement est décalée de sorte qu'elle se trouve en porte à faux par rapport à la partie disposée horizontalement.

Le brevet FR—A—710 150 a également décrit un divan transformable dans lequel l'assise et le dossier sont en contact lorsque le divan est dans sa configuration de siège, lesdites deux parties étant alignées sans discontinuité lorsque le divan est en position de lit de repos. Pour parvenir à ce résultat il est nécessaire de prévoir, en arrière des coussins formant dossier, un support qui est articulé au sommier et que se trouve au-dessus de ce dernier lorsque le divan forme siège.

Dans la réalisation de l'invention, le siège transformable présente cette particularité que la surface du dossier est alignée avec le dessus de l'assise sans solution de continuité lorsque le siège est en position couchette et le dossier demeure en appui contre la partie arrière de l'assise et reste toujours en contact avec la partie arrière de l'assise quelle que soit son inclinaison lorsque le siège est utilisée en tant que tel.

L'invention résout donc les problèmes exposés ci-dessus et remédie aux inconvénients mentionnés.

Conformément à l'invention, le siège transformable comportant une assise et un dossier est caractérisé par les caractéristiques indiquées dans la revendication 1.

Des formes de réalisation de l'objet de l'invention sont représentées, à titre d'exeples non limitatifs, au dessin annexé.

La fig. 1 est une élévation latérale schématique et en partie arrachée d'un siège faisant application de l'invention.

La fig. 2 est une élévation vue suivant la ligne II—II de la fig. 1.

La fig. 3 est une élévation analogue à la fig. 1, le siège étant tourné de 180° par rapport à cette dernière figure.

La fig. 4 est une élévation analogue à la fig. 3 illustrant une position caractéristique.

La fig. 5 est une perspective en coupe illustrant un développement de l'invention.

Le dessin illustre le siège de l'invention dans sa réalisation en tant que siège transformable en couchette pour véhicule mais il va de soi que l'invention peut être mise en oeuvre de façon analogue pour d'autres types de sièges, notamment pour des sièges d'ameublement.

Dans l'application considérée ci-dessus, le siège est monté sur des rails 1 pour pouvoir être avancé et reculé. L'armature du siège comporte des longerons 2 et 3 prévus pour pouvoir être déplacées par rapport aux rails 1 et comportant des mécanismes d'immobilisation qui ne sont pas représentés ni décrits davantage car ils peuvent être réalisés de nombreuses façons connues dans la technique et ils ne feront pas partie directement de l'invention.

Les longerons 2 et 3 sont réunis entre eux par un caisson 4 et une traverse arrière saillante 5 est prévue. Le caisson 4 sert au support d'une assise 6 convenablement rembourrée qui forme à sa partie arrière une saillie 6a venant recouvrir la traverse 5. Le longeron 2 supporte par un axe d'articulation 7 la branche 8a d'un étrier 8 dont la branche 8b est fixée à une manivelle 10 d'un boîtier de rappel 11. Le boîtier de rappel 11 peut être d'un type quelconque connu dans la technique des sièges et il comporte un organe de rappel, notamment un ressort spiral 12, qui tend toujours à faire pivoter la manivelle 10 dans le sens illustré par la flèche f au dessin. Le boîtier de rappel 11 peut être manoeuvré par un levier 13 qui permet d'immobiliser la manivelle 10 dans différentes positions angulaires. L'étrier 8 est maintenu appliqué contre la paroi arrière d'un dossier 9 par des guides 14, 14a, par exemple formés par l'extrémité d'un profilé 15 fixé audit dossier. Il est avantageux que les guides 14, 14a comportent contre leur partie en contact avec les branches 8a, 8b de l'étrier 8 des garnitures 16 en matière souple antifriction, par exemple celle connue sous le nom de Téflon.

La traverse 5 sert de support à des articulations 17 de biellettes 18 dont l'autre extrémité est reliée par des articulations 19 portées par un barreau 20 fixé à la face arrière du dossier 9.

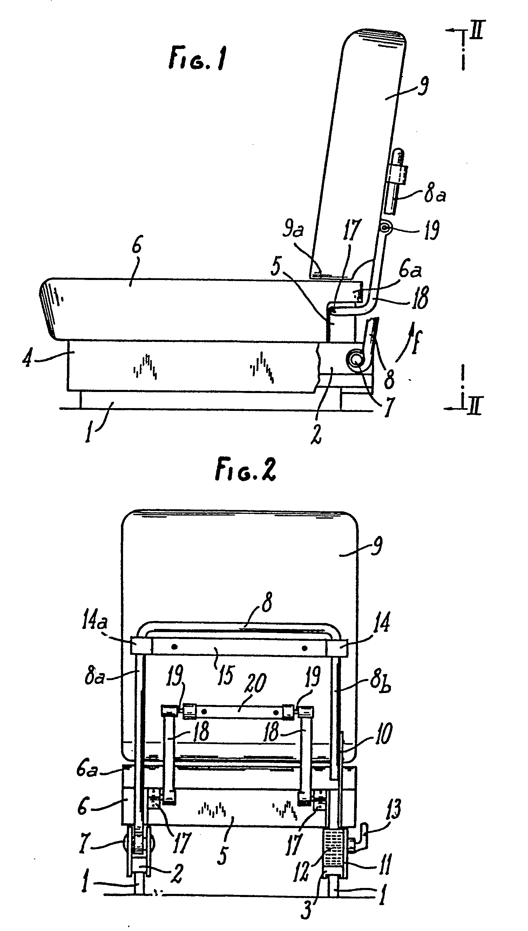

Comme le montre la fig. 1 les biellettes 18 sont coudées pour que leur articulation se trouve sensiblement alignée avec le plan médian du dossier 9. La longuer des biellettes 18 est, par ailleurs, choisis pour que le dessous 9a du dossier 9 vienne juste en appui contre le dessus de l'assise 6 et, en particulier, de la saillie 6a.

La disposition à la partie arrière du dossier de l'étrier 8 des biellettes et des organes qui relient cet étrier et ces biellettes au dossier permet un montage facile et également de dissimuler à la vue ces organes mécaniques en prévoyant un garnissage non représenté au dessnin.

Il va de soi que l'étrier pourrait ne comporter que ses branches 8a, 8b qui pourraient être engagées dans des fourreaux du dossier et, de même les biellettes 18 pourraient être remplacées par des manivelles fixées dans l'épaisseur du dossier ou directement au dos de celui-ci.

En position normale d'utilisation, le dossier 9 est relevé comme illustré aux fig. 1 à 3 et il est verrouillé dans sa position par le levier 13. Si l'on désire incliner quelque peu le dossier, il suffit d'appuyer sur le levier 13 ou de tirer sur ce levier suivant la nature du mécanisme qui lui est associé ce qui permet, ensuite, de faire pivoter le dossier et les branches de l'étrier autour de l'axe 7 pour que ledit dossier soit plus incliné vers l'arrière.

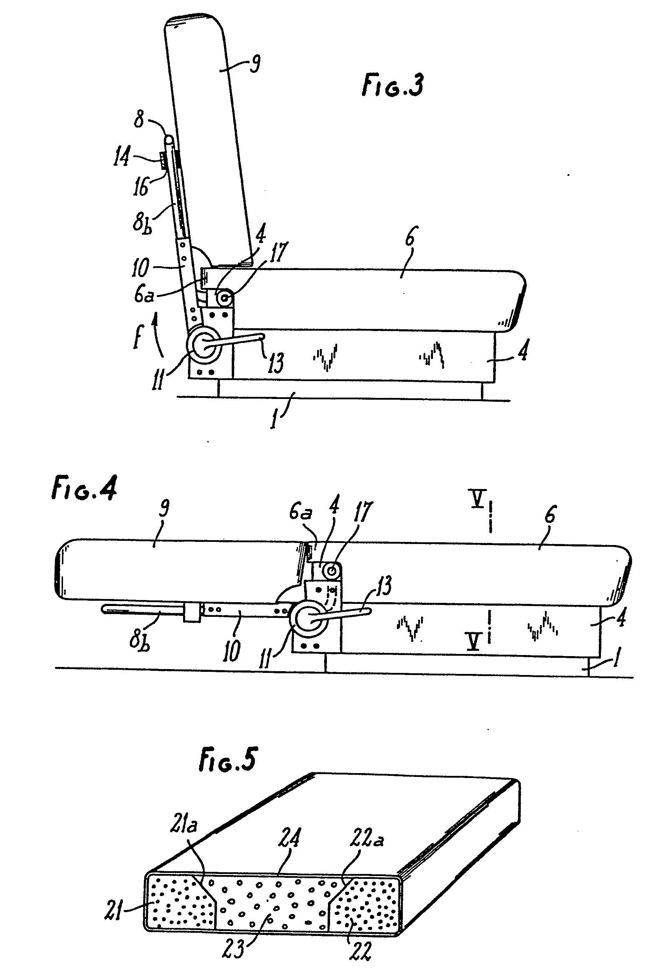

Le mouvement de pivotement vers l'arrière du dossier peut être poursuivi jusqu'au moment où ce dossier occupe une position horizontale pour laquelle sa face externe est alignée avec le dessus de l'assise 6, comme l'illustre la fig. 4.

Pendant le mouvement de pivotement du dossier depuis la position illustrée à la fig. 1 jusqu'à la position illustrée à la fig. 4, le dossier est maintenu à une distance constante des articulations 17 des biellettes ou manivelles 18 puisque celles-ci sont fixées au dossier. Par conséquent, la distance séparant les articulations 17 du dessous 9a du dossier ne varie pas. Par contre, l'articulation des branches 8a, 8b se trouvant à un niveau nettement inférieur provoque un déplacement de l'ensemble de l'étrier 8 par rapport à la face arrière du dossier 9. Ce déplacement est un mouvement de coulissement dont le guidage de la trajectoire est assuré par les guides 14, 14a.

En fin du mouvement de pivotement, le levier 13 permet d'assurer à nouveau le verrouillage de dossier 9 dans la position représentée à la fig. 4, position pour laquelle le ressort 12 est sous forte tension.

Pour ramener le dossier à la position représentée aux autres figures, il suffit de manoeuvrer à nouveau le levier 13 pour permettre au ressort 12 de se détendre ce qui fait pivoter l'étrier 8 dans le sens de la flèche f en entraînant le dossier.

La fig. 5 illustre un développement supplémentaire de l'invention selon lequel on prévoit de réaliser, tant le coussin formant l'assise que celui formant le dossier 9, d'une manière composite. En effet, on voit à la fig. 5, sur les côtés latéraux, des longerons 21, 22 en matière de garnissage relativement ferme, par exemple en mousse à relativement forte densité pouvant être chargée de fibres, et une âme médiane 23 en matériau sensiblement plus souple, par exemple en mousse à faible densité. L'ensemble est recouvert par une enveloppe 24. Bien que cela ne soit pas nécessaire, dans tous les cas il est avantageux que les longerons 21, 22 présentent des pans coupés 21a, 22a faisant que la largeur de l'âme 23 est plus importante au voisinage de la surface de l'assise et du dossier qu'à sa partie basse.

Comme cela ressort de ce qui précède, le mode de réalisation décrit ci-dessus des remplissages fait qu'ils peuvent présenter une surface parfaitement plane lorsqu'ils sont inutilisés mais qu'ils tendent à mouler le corps de l'usager qui s'asseoit sur le siège. L'usager se trouve alors maintenu comme dans un siège dit baquet. Cette disposition permet également d'utiliser l'assise et le dossier pour former des sièges couchettes confortables lorsque ces sièges couchettes sont associés à des coussins et que les usagers sont disposés transversalement par rapport au véhicule, comme cela peut être le cas dans certains véhicules de loisir.

**Revendications**

1. Siège transformable comportant une assise (6) placé sur un caisson (4) formant support et un dossier (9), caractérisé en ce que le dossier (9) est relié au caisson (4) supportant l'assise (6) par des éléments coulissants et par un système de biellettes (18), en ce que les éléments coulissants sont constitués par un étrier (8) coulissant par ses deux branches (8a, 8b) sur la face arrière du dossier (9) avec l'extrémité d'une (8a) des branches articulée sur un côté latéral du caisson (4) et l'extrémité de l'autre (8b) branche articulée sur un mécanisme de verrouillage de la position angulaire du dossier (9) disposé sur l'autre côté latéral du caisson (4) et en ce que le système de biellettes (18) comporte deux biellettes fixées chacune par une extrémité au dossier (9) et dont l'autre extrémité est articulée sur la partie arrière de l'assise (6) en un point sensiblement en alignement avec le plan médian dudit dossier (9).

2. Siège transformable selon la revendication 1, caractérisé en ce que l'étrier (8) est relié à un mécanisme à ressort (12) tendant à le ramener ainsi que le dossier (9) qu'il guide en position relevée.

3. Siège transformable selon l'une des revendications 1 et 2, caractérisé en ce que l'étrier (8) est guidé à l'arrière du dossier (9) par un profilé formant à son extrémité deux guides (14, 14a) prenant appui sur les branches dudit étrier.

4. Siège transformable selon l'une des revendications 1 à 3, caractérisé par des garnitures en matière souple et anti-friction prévues dans les guides (14, 14a) des branches de l'étrier (8).

5. Siège transformable selon l'une des revendications 1 à 4, caractérisé en ce que les biellettes (18) sont coudées et sont reliées, d'une part à une traverse disposée en dessous d'une saillie prolongeant l'assise (6) et, d'autre part, aux extrémités d'une barre fixée à la partie arrière du dossier (9).

6. Siège transformable selon l'une des revendications 1 à 5, caractérisé en ce que tant l'assise (6) que le dossier (9) comportent un remplissage complexe formé de longerons latéraux plus rigides qu'une âme médiane qu'ils entourent.

7. Siège transformable selon l'une des revendications 1 à 6, caractérisé en ce que les longerons latéraux de remplissage de l'assise (6) et du dossier (9) présentent des bords tombés pour conférer à l'âme médiane une flexibilité variable.

**Patentansprüche**

1. Umwandelbarer Sitz mit einer auf einem als Stütze dienenden Kasten (4) angeordneten Sitzfläche (6) und einer Rückenlehne (9), dadurch gekennzeichnet, dass die Rückenlehne (9) mit dem die Sitzfläche (6) tragenden Kasten (4) über Gleitelemente und ein Anlenkgestänge (18) verbunden ist, dass die Gleitelemente durch einen mit seinen beiden Schenkeln (8a, 8b) auf dem Hinterteil der Rückenlehne (9) gleitenden Bügel (8) gebildet sind, wobei das Ende des einen Schenkels (8a) mit einem seitlichen Teil des Kastens (4) und das Ende des zweiten Schenkels (8b) mit einem auf dem anderen seitlichen Teil des Kastens (4) angeordneten Verriegelungsmechanismus zum Fertstellen der Rückenlehne (9) in der jeweiligen Winkelstellung gelenkig verbunden ist, und dass das Anlenkgestänge (18) zwei Stangen aufweist, die jeweils mit dem einen ihren Enden und die Rückenlehne (9) festgebunden sind und deren anderes Ende mit dem Hinterteil der Stizfläche (6) an einem im wesentlichen mit der Projektion der Mittelebene der Rückenlehne (9) fluchtenden Punkt gelenkig verbunden sind.

2. Umwandelbarer Sitz nach Anspruch 1, dadurch gekennzeichnet dass der Bügel (18) mit einem Federmechanismus (12) verbunden ist, welcher den Bügel und auch die Rückenlehne, die er führt, in eine aufgerichtete Ausgangsstellung spannt.

3. Umwandelbarer Sitz nach einem der Ansprüche 1 und 2, dadurch gekennzeichnet, dass der Bügel (18) hinter der Rückenlehne (9) mit Hilfe eines Profils geführt ist, welches an seinem Ende zwei Führungen bildet, die auf den Schenkeln Bügels abgestützt sind.

4. Umwandelbarer Sitz nach einem der Ansprüche 1 bis 3, dadurch gekennzeichnet, dass die Beschläge aus elastischen Material, welches die Reibung mindert, in der Führungen (14, 14a) der Schenkel des Bügels (18) vorgesehen sind.

5. Umwandelbarer Sitz nach einem der Ansprüche 1 bis 4, dadurch gekennzeichnet, dass die Stangen (18) bogenförmig sind und einerseits mit einem unterhalb eines Vorsprungs, welcher eine Verlängerung der Sitzfläche (6) darstellt, angeordneten Querteil und andererseits mit den Enden einer Stange verbunden sind, welche am rückwärtigen Abschnitt der Rückenlehne befestigt ist.

6. Umwandelbarer Sitz nach einem der Ansprüche 1 bis 5, dadurch gekennzeichnet, dass sowohl die Sitzfläche (6) wie auch die Rückenlehne (9) eine komplexe Füllung aufweisen, die aus seitlichen Holmen besteht, deren Verwindungsseifigkeit höher ist als die der von den Holmen umschlossenen Einlage in der Mitte.

7. Umwandelbarer Sitz nach einem der Ansprüche 1 bis 6, dadurch gekennzeichnet, dass die seitlichen Holme in der Füllung der Sitzfläche (6) und der Rückenlehne (9) nach unten schräg verlaufende Kanten aufweisen, so dass die Mitteleinlage eine veränderliche Biegefähigkeit aufweist.

**Claims**

1. Transformable seat comprising a seat member (6) placed on a support forming case (4) and a seat back (9), characterized in that the seat back (9) is connected to the case (4) supporting the seat member (6) by sliding elements and by a system of small connecting rods (18), in that the sliding elements are formed by a stirrup (8) sliding by its two arms (8a, 8b) on the rear side of the seat back (9) with the end of one (8a) of the arms being pivotally mounted on a lateral side of the case (4) and the end of the other (8b) arm being pivotally mounted on a mechanism for locking the angular position of the seat back (9) placed on the other lateral side of the case (4), and in that the system of small connecting rods (18) comprises two small connecting rods fixed each one by one end to the seat back (9) and of which the other end is pivotally mounted on the rear part of the seat member (6) at a point substantially aligned with the median plane of said seat back (9).

2. Transformable seat according to claim 1, characterized in that the stirrup (8) is connected to a spring mechanism (12) tending to return it as well as the seat back (9) which it guides to an upstanding position.

3. Transformable seat according to one of claims 1 and 2, characterized in that the stirrup (8) is guided at the rear of the seat back (9) by a section forming at its end two guide-pieces (14, 14a) bearing against the arms of said stirrup.

4. Transformable seat according to one of claims 1 to 3, characterized by lining means in flexible and antifriction material provided in the guide-pieces (14, 14a) of the arms of the stirrup (8).

5. Transformable seat according to one of claims 1 to 4, characterized in that the small connecting rods (18) are bent and are connected, on the one hand, to a crossbeam placed below a projection prolongating the seat member (6) and, on the other hand, to the ends of a bar secured at the rear portion of the seat back (9).

6. Transformable seat according to one of claims 1 to 5, characterized in that both the seat member (6) and the seat back (9) comprise a composite stuffing formed of side longitudinal members more rigid than a median core which they surround.

7. Transformable seat according to one of claims 1 to 6, characterized in that the stuffing side longitudinal members of the seat member (6) and the seat back (9) are formed with bent edges for imparting to the median core a variable flexibility.

Fig. 1

Fig. 2

1

FiG.3

FiG.4

FiG.5